## Europäisches Patentamt

## European Patent Office

## Office européen des brevets

(19)

(11) Veröffentlichungsnummer: **0 136 321**
**B1**

(12) ## EUROPÄISCHE PATENTSCHRIFT

(45) Veröffentlichungstag der Patentschrift:
24.05.89

(51) Int. Cl.⁴: **F 42 D 3/00,** G 21 D 1/00

(21) Anmeldenummer: 84900976.6

(22) Anmeldetag: 01.03.84

(86) Internationale Anmeldenummer:
PCT/EP 84/00055

(87) Internationale Veröffentlichungsnummer:
WO 84/03556 (13.09.84 Gazette 84/22)

(54) VERFAHREN ZUR SPRENGTECHNISCHEN ZERLEGUNG DICKWANDIGER STAHLBEHÄLTER.

(30) Priorität: 01.03.83 DE 3307060

(43) Veröffentlichungstag der Anmeldung:
10.04.85 Patentblatt 85/15

(45) Bekanntmachung des Hinweises auf die Patenterteilung:
24.05.89 Patentblatt 89/21

(84) Benannte Vertragsstaaten:
BE CH FR GB LI

(56) Entgegenhaltungen:
DE-A- 2 745 408
DE-A- 2 908 141

(73) Patentinhaber: **Battelle-Institut e.V., Am
Römerhof 35 Postfach 900 160,
D-6000 Frankfurt/Main 90 (DE)**

(72) Erfinder: **BÖHM, Bruno, Am Steingritz 3, D-6380 Bad
Homburg (DE)**
Erfinder: **FREUND, Hans-Ulrich, Louisenstrasse 138,
D-6380 Bad Homburg (DE)**
Erfinder: **HORNING, Werner, Georg-Speyer-Strasse 77,
D-6000 Frankfurt/Main (DE)**

(74) Vertreter: **Sartorius, Peter, Dipl.-Ing., Battelle-Institut
e.V. Abteilung Patente Am Römerhof 35,
D-6000 Frankfurt am Main 90 (DE)**

## Beschreibung

Die Erfindung betrifft ein Verfahren zur sprengtechnischen Zerlegung dickwandiger Stahlbehälter, insbesondere Reaktordruckbehälter, wobei die Behälterwandung zunächst linienförmig vorgekerbt, anschließend duktil-spröde abgekühlt und durch Sprengladungen zerlegt wird.

Ein derartiges Verfahren beschreibt die DE-C-27 26 206. Dort ordnet man eine einzige zentrale Sprengladung in der Behälterachse an, deren Sprengwirkung über eine in den Behälter eingegebene, kompressible Flüssigkeit auf die Behälterwandung weitergeleitet wird. Durch die Detonation wird die Flüssigkeit jedoch weit in die Umgebung versprüht. Dies führt zu einer zusätzlichen Verschmutzung benachbarter Strukturen durch die Flüssigkeitsverschleppung und im Falle der Zerlegung eines Reaktordruckbehälters sogar zu einer Kontamination der Umgebung, bedingt durch die abgegebene Koppelflüssigkeit.

Die DE-A-27 45 408 beschreibt ein ähnliches Verfahren, wobei jedoch der Stahlbehälter nicht abgekühlt wird. Statt dessen wird die Behälterwandung durch Schneidladungen vorgekerbt und anschließend mittels mindestens einer Sprengladung zerstört. Die Anordnung dieser Sprengladung in Bezug auf die Geometrie der Behälterwandung kann dieser Druckschrift nicht entnommen werden.

Die DE-A-29 08 141 beschreibt ein Verfahren zur Zerlegung großer und dickwandiger Stahlteile aus dem kerntechnischen Anwendungsbereich, die in den vorgesehenen Trennstellenbereichen tiefgekühlt und dann mit Hilfe von entsprechend angebrachten Sprengladungen verlegt werden. Auch dieser Druckschrift kann die Anordnung der Sprengladungen in Bezug auf die Geometrie der zu zerlegenden Stahlteile nicht entnommen werden.

Ausgehend von einem Verfahren der eingangs genannten Art liegt daher der Erfindung die Aufgabe zugrunde, diese so auszugestalten, daß die Zerlegung mit möglichst wenig Sprengstoff erreicht wird.

Diese Aufgabe wird erfindungsgemäß durch die Merkmale des kennzeichnenden Teils des Anspruchs 1 gelöst.

Durch diese Maßnahme wird also die Sprengladung linienförmig in einem derartigen Muster an der Innenwand des Behälters angebracht, daß die durch die Sprengung in der Behälterwand entstehenden Schwingungen sich an vorgegebenen Stellen überlagern und dort zum Bruch führen. Versuche haben gezeigt, daß man mit Hilfe des erfindungsgemäßen Verfahrens mit sehr viel weniger Sprengmitteln auskommt als dies beim vorstehend geschilderten Stand der Technik der Fall war. Das erfindungsgemäße Verfahren eignet sich daher insbesondere zur sprengtechnischen Zerlegung dickwandiger Reaktordruckbehälter, weil bei diesem Verfahren die Kontamination der Umgebung des Druckbehälters innerhalb der behördlich vorgeschriebenen Grenzen bleibt.

Die Sprengladung kann gleichzeitig oder in sehr kurzen Zeitabständen, z.B. im Mikrosekundenbereich, gezündet werden. Stets ist es wesentlich, daß die Geometrie der Verlegung der Sprengladungen an der Behälter-Innenwand und die zeitliche Abfolge der Zündung der Sprengladung bzw. der Sprengladungen so aufeinander abgestimmt sind, daß an vorbestimmten Stellen, längs denen der Behälter zerfallen soll, Spitzen der mechanischen Belastung in der Behälterwandung entstehen, die dann an diesen Stellen zum Zerlegen des Stahlbehälters führen. Hierzu trägt bei, daß der Stahlbehälter duktil-spröde abgekühlt wurde.

Eine wichtige Ausgestaltung der Erfindung ist dadurch gekennzeichnet, daß die Behälterwandung durch Schneidladungen vorgekerbt wird. Im Bereich der Vorkerblinien, die durch die Schneidladungen in der Behälterwand erzeugt werden, erfolgen dann mit Hilfe der eigentlichen Sprengladungen die Brüche der Behälterwandung.

Die Sprengladungen können in der Mitte zwischen benachbarten Vorkerbungslinien angeordnet werden. Es ist auch möglich, die Sprengladungen nahe den Vorkerbungslinien verlaufen zu lassen und die Schneid- und Sprengladungen zeitlich versetzt zueinander zu zünden.

Die Erfindung wird anhand der schematischen Zeichnung näher erläutert. Es zeigen:

Fig. 1 eine mögliche Anordnung der linienförmigen Sprengladungen und

Fig. 2a–c Beispiele für die Positionierung der Sprengladungen an einem Behälterausschnitt mit angedeuteten Bruchstellen.

Durch einen sehr kurzen und harten Schlag auf eine massive Struktur, wie dies z.B. auch bei der Detonation einer Sprengladung auf der Behälterwand der Fall ist, breiten sich ausgehend vom Einwirkungsort Longitudinal-, Transversal- und Oberflächenwellen aus. Diese Wellen können je nach den geometrischen Gegebenheiten durch Beugung, Reflexion und Interferenz zu so hohen Spannungsspitzen führen, daß es zu lokalen Werkstoffzerstörungen führt. Durch Überlagerung von Spannungswellen, die von zwei oder mehreren verschiedenen Enstehungszentren, z.B. durch das gleichzeitige Zünden von zwei benachbarten, wandanliegenden Ladungen herrühren, können diese Phänomene zu gezielten, vorherbestimmbaren Werkstoffbrüchen ausgenutzt werden. Zusätzliche Kerben bzw. künstliche Risse an den Stellen mit Spannungskonzentrationen erleichtern die Rißentstehung und das Rißwachstum.

Weiterhin tritt beim gleichzeitigen Anregen der Behälterwand an mehreren Stellen durch mehrere gleichzeitig gezündete wandanliegende Sprengladungen, beim nichtspontanen Bruch eine erzwungene Schwingungsanregung ein. Die gezielte Vorgabe von Schwingungsknoten an den vorgekerbten Stellen führt ebenfalls zu gewollten Brüchen.

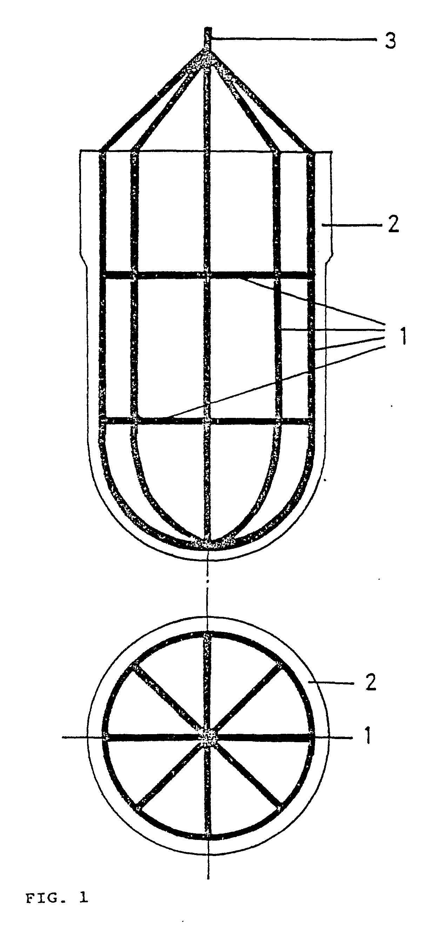

Wie aus Fig. 1 hervorgeht, wird erfindungsgemäß die Zersprengung mit linienförmigen Sprengladungen, z.B. Sprengschnüren, 1 vorgenommen, die in Längs- und/oder Querrichtung des Behälters 2, im wesentlichen parallel zueinanderlaufen.

Die linienförmigen Sprengladungen 1 bilden somit ein den Innenabmessungen des Behälters angepaßtes Netzwerk und besitzen einen gemeinsamen Zünder 3. Das Netzwerk wird durch die Öffnung des Behälters 2 wandanliegend positioniert. Dies ist durch Fernsteuerung leicht zu erzielen.

Wird entsprechend einer Verfahrensvariante eine Vorkerbung erforderlich, so werden mit einem fernbedienbaren Manipulator entsprechend dem Sprengplan aufgebaute Schneidschnüre auf die Plattierung aufgesetzt. Dieses Netzwerk zur Vorkerbung hat den gleichen Aufbau wie das Netzwerk zum Zersprengen. Durch das Zünden der Schneidschnüre wird die etwa 7 mm starke Plattierung durchgetrennt und der Grundwerkstoff je nach Wahl der Ladung verschiedene tief gekerbt. Der vorgekerbte ferritische Grundwerkstoff wird dann soweit abgekühlt, daß dieser in den spröden Zustand übergeht. Dies ist bei einem Stahl aus 22 NiMoCr 37 bereits um −20 °C der Fall.

Vorzugsweise werden die Trenn- bzw. Sprengschnüre bereits vor dem Abkühlen der Behälterwand an dieser positioniert. Nachdem der Abkühlvorgang abgeschlossen ist, werden alle Trennschnüre gleichzeitig zur Detonation gebracht. Die Vorkerbung und die Positionierung der Sprengschnüre werden erfindungsgemäß so aufeinander abgestimmt, daß die Spannungsspitzen, die von der Wellenausbreitung resultieren, sich genau an den gekerbten Stellen überlagern. An diesen Stellen wird zusätzlich die Querschnittsverringerung durch die Vorkerbung, die Spannungserhöhung durch den Kerbgrund (Kerbfaktor) und die geringe Dehnung durch die Tieftemperaturversprödung ausgenutzt.

Nach einer Ausführungsform gemäß Fig. 1a werden die Sprengschnüre 1 zur Zerlegung so im Behälter 2 positioniert, daß die Vorkerbung 4 sich zwischen den Ladungen befindet. Hierbei kann eine gleichzeitige Zündung zu einer Zerlegung in vorgegebene Bruchstücke führen.

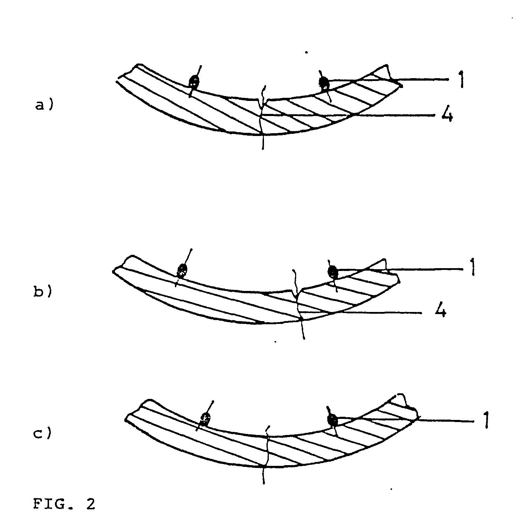

Nach der Ausführungsform gemäß Fig. 2b befindet sich die Vorkerbung 4 nicht in der Mitte zweier benachbarter Ladungen 1 sondern jeweils in der Nähe einer Trennschnur. Hierbei kann zeitlich versetzte Zündung erfolgen.

Schließlich ist es auch möglich, wie in Fig. 2c dargestellt, daß die Behälterwand 2 ohne Vorkerbung mit gleichzeitiger Zündung zerlegt wird.

**Patentansprüche**

1. Verfahren zur sprengtechnischen Zerlegung dickwandiger Stahlbehälter, insbesondere Reaktordruckbehälter, wobei die Behälterwandung zunächst linienförmig vorgekerbt, anschließend duktil-spröde abgekühlt und durch Sprengladungen zerlegt wird, dadurch gekennzeichnet, daß das Vorkerben mittels Schneidladungen erfolgt und die Sprengladungen ebenfalls linienförmig angebracht sind, wobei sowohl die Schneidladungen als auch die Sprengladungen im Bereich der Behälterwandung in Längs- und/oder Querrichtung im wesentlichen parallel und mit Abstand versetzt zueinander angeordnet sind.

2. Verfahren nach Anspruch 1, dadurch gekennzeichnet, daß die Sprengladungen gleichzeitig gezündet werden.

3. Verfahren nach Anspruch 1, dadurch gekennzeichnet, daß die Sprengladungen in sehr kurzen Zeitabständen gezündet werden.

4. Verfahren nach einem der Ansprüche 1 bis 3, dadurch gekennzeichnet, daß mit den Schneid- und/oder Sprengladungen jeweils ein dem Innendurchmesser des Behälters angepaßtes Netzwerk gebildet wird, das als Ganzes oder in Einzelteilen durch die Behälteröffnung wandanliegend im Behälter positioniert wird.

5. Verfahren nach Anspruch 1, dadurch gekennzeichnet, daß die Sprengladungen in der Mitte zwischen benachbarten Vorkerbungslinien angeordnet werden.

6. Verfahren nach Anspruch 1, dadurch gekennzeichnet, daß die Sprengladungen nahe den Vorkerbungslinien verlaufen und die Schneid- und Sprengladungen zeitlich versetzt zueinander gezündet werden.

**Claims**

1. Method for the explosive dismantling of thick-walled steel vessels, in particular reactor pressure vessels, the wall of the vessel being first provided with linear notches, then transferred from the ductile into the brittle state by cooling, and fractionated by explosive charges, comprising: prenotching being effected by means of wedge-type charges and the explosive charges being also arranged linearly, both the wedge-type charges and the explosive charges, in the cylindrical part of the vessel wall, being arranged essentially parallel in longitudinal and/or transverse direction, and staggered with respect to each other.

2. Method as claimed in claim 1, wherein the explosive charges are fired simultaneously.

3. Method as claimed in claim 1, wherein the explosive charges are fired at very short intervals.

4. Method as claimed in any of the claims 1 to 3, wherein the wedge-type and/or explosive charges form a network adapted to the inside diameter of the vessel, said network being introduced through the vessel opening as a whole or in parts and positioned on the inner wall of the vessel.

5. Method as claimed in claim 1, wherein the explosive charges are placed in the middle between neighbouring prenotched lines.

6. Method as claimed in claim 1, wherein the explosive charges are placed close to the prenotched lines and the wedge-type and explosive charges are fired successively at short interval.

**Revendications**

1. Procédé de destruction par explosif de cuves en acier à paroi épaisse, notamment de cuve de réacteur sous pression, la paroi de la cuve étant tout d'abord entaillée suivant des lignes, puis elle est refroidie pour la rendre ductile, cassante et elle est détruite par des charges explosives, caractérisé en ce que la pré-entaille a lieu à l'aide de charges de coupe et que les charges d'explosif sont également déposées suivant des lignes, les charges de coupe, tout comme les charges d'explosif sont disposées au niveau de la paroi de la cuve en sens longitudinal et transversal, en directions essentiellement parallèles et avec un écart de l'une par rapport à l'autre.

2. Procédé selon la revendication 1, caractérisé en ce que les charges explosives sont allumées simultanément.

3. Procédé selon la revendication 1, caractérisé en ce que les charges explosives sont allumées avec de très courts décalages dans le temps.

4. Procédé selon l'une des revendications 1 à 3, caractérisé en ce que les charges de coupe et/ou les charges explosives constituent respectivement un réseau adapté au diamètre intèrieur de la cuve, qui est positionné comme un tout, ou par ses pièces constitutives sur la paroi de la cuve par l'ouverture de la cuve.

5. Procédé selon la revendication 1, caractérisé en ce que les charges explosives sont disposées au milieu entre deux lignes voisines de pré-entaille.

6. Procédé selon la revendication 1, caractérisé en ce que les charges explosives s'étendent près des lignes de pré-entaille et en ce qu'on allume de manière décalée dans le temps les charges de coupe et les charges explosives.

FIG. 1

a)

b)

c)

FIG. 2